(19) Europäisches Patentamt
European Patent Office
Office européen des brevets

(11) EP 4 431 563 A1

(12) EUROPEAN PATENT APPLICATION

(43) Date of publication:
**18.09.2024 Bulletin 2024/38**

(21) Application number: **23305336.2**

(22) Date of filing: **13.03.2023**

(51) International Patent Classification (IPC):
***C08L 23/00*** *(2006.01)*

(52) Cooperative Patent Classification (CPC):
(C-Sets available)
**C08L 23/00;** C08L 23/04; C08L 2203/16 (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **ARKEMA FRANCE**
**92700 Colombes (FR)**

(72) Inventors:
- **WEAVER, Keith**
  **KING OF PRUSSIA, 19406-0936 (US)**
- **ALTHOUSE, David**
  **KING OF PRUSSIA, 19406-0936 (US)**
- **MCDONOUGH, John**
  **KING OF PRUSSIA, 19406-0936 (US)**
- **TOBIN, Lori**
  **KING OF PRUSSIA, 19406-0936 (US)**
- **PINEAU, Quentin**
  **27470 SERQUIGNY (FR)**
- **REYNA-VALENCIA, Alejandra**
  **27470 SERQUIGNY (FR)**

(74) Representative: **Arkema Patent**
**Arkema France**
**DRD-DPI**
**420, rue d'Estienne d'Orves**
**92705 Colombes Cedex (FR)**

# (54) POLYMER PROCESSING AIDS FOR POLYMER EXTRUSION

(57) The present invention relates to a thermoplastic polymer composition comprising a matrix polymer (A) and a polymer processing aid (B), wherein
- (δ polymer (B) - δ matrix polymer (A)) >=2.0 (J1/2.cm-3/2), preferably > 3.0 (J1/2.cm-3/2), δ being the solubility parameter calculated according to Fedor method, and
- the melt viscosity ratio of polymer (B) over matrix polymer (A) is less than 0.30, preferably less than 0.20, the melt viscosity being measured by capillary rheometry at 210°C and a shear rate of 100 $s^{-1}$.

EP 4 431 563 A1

(52) Cooperative Patent Classification (CPC): (Cont.)

C-Sets
**C08L 23/00, C08L 77/00;**
C08L 23/04, C08L 77/00

**Description**

TECHNICAL FIELD

The present invention relates to a thermoplastic polymer composition comprising a matrix polymer (A) and a polymer process aid (B). The present invention also relates to a process of extruding a thermoplastic polymer composition in an extruder and an extruded article.

TECHNICAL BACKGROUND

In an extrusion process, typically a melt extrusion process, a solid polymer (as referred to a matrix polymer), normally in the form of pellets or powder, is fed into an extruder and heated to a temperature above the melting point to produce a polymer melt. The polymer melt is then conveyed through an extrusion die located at the end of the extruder and formed into a desired shape such as a tube, sheet or film.

During the extrusion process, the polymer melt is subjected to shear stresses that in part can cause quality defects on the product's surface, with the most common quality defect being "melt fracture". Melt fracture appears as a surface haze often described as appearing matt in finish, and under magnification, visually appears as a rough surface and having a saw tooth pattern.

As a polymer melt exits the die, the slower moving polymer in direct contact with the die accelerates quickly. This quick acceleration often causes cohesive fracture on the polymer surface referred to as melt fracture. Melt fracture is normally considered an unacceptable quality problem that adversely affects optical and visual characteristics of the final product (an example would be a blown film). Melt fracture can also adversely affect physical and mechanical properties of the final product.

The formation of melt fracture is most prevalent when extruding for example high molecular weight polyolefin polymers such as those having Melt Index values at or below 1 g/10 minutes. A high molecular weight polymer is often chosen to obtain improved physical and mechanical properties of the film produced, such as higher tensile strength at break. Other times, higher molecular weight polymers are selected for needed processing characteristics such as increased polymer melt strength. Processes such as blown film and pipe extrusion are common examples of processes that benefit from polymers having higher melt viscosities.

A quality problem sometimes attributed to melt fracture is polymer build-up at the die exit, and this problem is often referred to as die drool. When melt fracture occurs, small polymer melt particles can shed from the surface and collect on tooling surfaces near the die exit. Over time, the small melt particles build up to form die drool. Because die drool tends to remain on the die for extended periods of time, it can burn and form solid specks that eventually release from the die to form quality defects (such as specks and drag marks) on the product. Such problems, in addition to increasing scrap rate and labor costs, tend to limit overall production rates. Additives such as mineral fillers (contained in many polymer compounds) can further promote melt fracture and die drool formation.

Melt fracture and die drool formation often occur in association with another phenomena called die swell. The formation of die swell is associated with the quick release of elastic stresses in the melt as the melt exits the die. The presence of excessive die swell is known to contribute to quality problems.

Extrusion of polymers having low melt index often generate high melt pressures. Often times, the production speed is limited by the maximum melt pressure rating for the system being used.

To address and resolve these problems, polymer processing aids (PPAs) containing fluoropolymers are widely used. A polymer processing aid may work by depositing a "slippery" coating on internal tooling surfaces that are in direct contact with the polymer melt. This creates "wall slip" where the polymer at the interface with the wall of the die slips, thereby reducing the melt stress as the melt exits the die. The polymer melt can then flow through the die with less shear stress formation which eliminates melt fracture and lower melt pressures. Polymer processing aids can provide multiple benefits including but not limited to reduction or elimination of melt fracture (leading to visually clearer products), lower die swell, lower die drool formation, lower melt pressures, faster line speeds, and improved product properties.

For melt processable thermoplastic polymers (and compounds), there exists a shear rate that if processed below will produce only a smooth surface (and often shiny), and if above will produce a rough (and often dull) surface. The shear rate at which surface defects are first observed is referred to as the Critical Shear Rate (CSR). Below the CSR, the polymer surface is normally smooth, and just above the CSR, melt fracture begins to form. As a general rule, as shear rate increases above the CSR, the size or intensity of the melt fracture also increases. An example polymer having these characteristics would be a polyolefin polymer such as a LLDPE resin (linear low-density polyethylene) used in the manufacture of blown films. Other examples include LDPE (low-density polyethylene), MDPE (medium-density polyethylene), UHDPE (ultra high-density polyethylene) or HDPE (high-density polyethylene).

Low Melt Index LLDPE polymers typically have low critically shear rates and are more prone to melt fracture formation. As a general rule, the lower the polymer Melt Index, the more prone the polymer will be to melt fracture

formation. Since low Melt Index LLDPE polymers are normally used to produce a blown film, as would be expected, melt fracture issues are a common concern for such processes.

US5986005 describes a composition comprising a fluoroelastomer and a thermoplastic polyamide diluted in a hydrocarbon polymer, for improving the conversion of hydrocarbon polymers. The thermoplastic polyamide is defined as a polymer containing polyamide blocks and polyether blocks.

WO02/066544 describes an extrudable composition comprising a non-fluorinated melt processable polymer and a fluoropolymer processing aid.

US2013/093118 describes a composition comprising a polyolefin and a polymer which can be a polyamide, copolyamide, a second polyolefin different from the first one, copolymers of ethylene and vinyl acetate (EVA), copolymers of ethylene and vinyl alcohol (EVOH), polystyrene, polycarbonate and polyvinyl chloride (PVC).

WO 2023/017327 describes a polymer processing aid comprises a block copolymer having polyamide blocks and polyether blocks and reduces melt defects well in a thermoplastic polyolefin.

However, it was found that PPAs as mentioned above do not achieve a satisfied result in reduction of melt defects.

Hence, there is a need for PPA additives which are more effective than the known fluorinated PPA or other type of PPA known in the art.

## SUMMARY OF THE INVENTION

The present invention provides a thermoplastic polymer composition comprising a matrix polymer (A) and a polymer processing aid PPA (B), wherein

- ($\delta$ polymer (B) - $\delta$ matrix polymer (A)) >=2.0 (J1/2.cm-3/2), preferably > 3.0 (J1/2.cm-3/2), $\delta$ being the solubility parameter calculated according to Fedor method, and
- the melt viscosity ratio of polymer (B) over matrix polymer (A) is less than 0.30, preferably less than 0.20, the melt viscosity being measured by capillary rheometry at 210°C and a shear rate of 100 $s^{-1}$.

The solubility parameter is determined according to the Fedor method (R.F. Fedors, Polymer engineering and science 142, 147-154, 1974 ; R.F. Fedors, Polym. Eng. Science, vol. 14, N°2, 147, 1974), according to the following formula :

$$\delta = \left(\frac{\sum \Delta E_i^v}{\sum V_i}\right)^{1/2}$$

$\Delta$E corresponds to the cohesive energy and V the molar volume.

The method therefore consists in adding the energy contributions of the various groups constituting the polymer. The energy contributions of the different groups are indicated in the following work: Eric A. Grulke, Solubility Parameter Values, Polymer Handbook, 4th Edition, 1999, VII/675-714.

According to the present invention, the amount of the matrix polymer (A) is at least 50%, typically from 55 to 99,9% by weight in the thermoplastic polymer composition.

In some embodiments, the thermoplastic polymer composition comprises more than one polymer processing aid.

The present invention makes it possible to address the need expressed above. It provides, more particularly, improved PPA additives to improve processability of extruded polymers. For example, it reduces or eliminates melt fracture, die buildup and/or surface defects in polymer compositions during extrusion process. This is accomplished through the use of a specific polymer processing aid in view of the matrix polymer used in extrusion process.

Compared to conventional fluorinated PPAs, it is further advantageous as it is less expensive and non-halogenated.

The present invention thus provides more effective PPA additives for improving processability of extruded polymer materials, in particular for reducing melt fracture.

In some embodiments, the amount of polymer processing aid (B) in the thermoplastic polymer composition is from 50 to 5000 ppm (parts per million), preferably from 100 to 3000 ppm, more preferably from 200 to 3000 ppm, based on the weight of the matrix polymer.

In some embodiments, the matrix polymer is a polyolefin composition, preferably, the polyolefin composition comprises, essentially consists of, or consists of non-functionalized polyolefin.

In some embodiments, the matrix polymer comprises, essentially consists of, or consists of, a linear low-density polyethylene (LLDPE), a low-density polyethylene (LDPE), a medium-density polyethylene (MDPE), a high-density

polyethylene (HDPE), an ultra-high-density polyethylene (UHDPE), or a polypropylene (PP), or combinations thereof.

In some embodiments, the polymer processing aid is chosen from a polyamide, a PEBA, or a mixture thereof.

In some embodiments, the polymer processing aid is a polyamide being or comprising a homopolyamide including PA6, PA10, PA11, and/or PA12, and/or a copolyamide including PA66; PA610; PA612; PA1012; PA1212; and/or PA6,10,12, preferably PA11.

In some embodiments, the polymer processing aid (B) having a solubility parameter greater than 20.0, preferably greater than 21.0 (J1/2.cm$^{-3}$/2), the solubility parameter being calculated according to Fedor method, and a melt viscosity of between 10 and 500 Pa.s, preferably between 20 and 400, more preferably between 20 and 350, measured by capillary rheometry at 210°C and a shear rate of 100 $s^{-1}$.

In some embodiments, the thermoplastic polymer composition comprises at least one adjuvant, preferably, the adjuvant is or comprises one or more selected from a polyether, an aliphatic polyester, a poly(hydroxybutyrate), a silicone, a fatty acid ester and a fatty acid amide, preferably a polyether copolymer.

According to another aspect, the present invention provides a process of extruding a thermoplastic polymer composition comprising a matrix polymer (A) in an extruder, comprising a step of feeding a polymer processing aid to the extruder, wherein

- ($\delta$ polymer (B) - $\delta$ matrix polymer (A)) >=2.0 (J1/2.cm-3/2), preferably > 3.0 (J1/2.cm-3/2), $\delta$ being the solubility parameter calculated according to Fedor method, and
- the melt viscosity ratio of polymer (B) over matrix polymer (A) is less than 0.30, preferably less than 0.20, the melt viscosity being measured by capillary rheometry at 210°C and a shear rate of 100 $s^{-1}$.

In some embodiments, the process further comprises a step of feeding at least one adjuvant to the extruder.

In some embodiments, the polymer processing aid and the adjuvant if present are fed in the form of a masterbatch composition containing a carrier polymer (C).

In some embodiments, the polymer processing aid and the adjuvant if present are directly fed to the extruder, separately, simultaneously, or as a blend.

In some embodiments, the matrix polymer is a polyolefin, preferably, the polyolefin composition comprises, essentially consists of, or consists of non-functionalized polyolefin.

In some embodiments, the matrix polymer comprises, essentially consists of, or consists of, a linear low-density polyethylene (LLDPE), a low-density polyethylene (LDPE), a medium-density polyethylene (MDPE), a high-density polyethylene (HDPE), an ultra-high-density polyethylene (UHDPE), or a polypropylene (PP), or combinations thereof.

In some embodiments, the amount of polymer processing aid (B) is from 50 to 5000 ppm, preferably from 100 to 3000 ppm, more preferably from 200 to 3000 ppm, based on the weight of the matrix polymer.

In some embodiments, the polymer processing aid is chosen from a polyamide, a PEBA, or a mixture thereof.

In some embodiments, the polymer processing aid (B) having a solubility parameter greater than 20 (J1/2.cm-3/2), the solubility parameter being calculated according to Fedor method, and a melt viscosity of between 10 and 500 Pa.s, preferably between 20 and 500, more preferably between 20 and 400, most preferably between 30 to 100, measured by capillary rheometry at 210°C and a shear rate of 100 $s^{-1}$.

In some embodiments, the polymer processing aid is a polyamide, a PEBA, or a mixture thereof, preferably, the polyamide or the block polyamide of PEBA is chosen from PA66, PA 610, PA612, PA1010, PA1012, PA 1212, or a copolyamide PA 6/12, PA 6/11, PA 6/1010, PA 6/66, PA 6/66/12, PA 6/66/11, PA 6/66/610, PA 6/612/11, or a blend of these polymers.

In some embodiments, one or more polymer processing aids are admixed (e.g. pre-mixed), or pre-blended (e.g. dry blended or melt blended) with the matrix polymer followed by extrusion of the matrix polymer.

In some embodiments, one or more polymer processing aids are co-fed with the matrix polymer in the extruder.

In some embodiments, one or more polymer processing aids are added to the matrix polymer to prepare a masterbatch. The resulting masterbatch can then be used to introduce the one or more polymer processing aid into the matrix polymer in any conventional manner prior to the extrusion of the matrix polymer (e.g. dry blending or melt blending) or during the extrusion of the matrix polymer (e.g. co-feeing with the matrix polymer to an extruder).

According to another aspect, the present invention provides an extruded article comprising a polymer composition as defined above, preferably the article being a film, a sheet, a tube, a pipe, a wire, a fiber, a cable, a wire coating or a cable jacketing.

According to another aspect, the present invention provides the use of a polymer (B) as a processing aid for the extrusion of a thermoplastic polymer composition comprising a matrix polymer (A), wherein

- ($\delta$ polymer (B) - $\delta$ matrix polymer (A)) >=2.0 (J1/2.cm-3/2), preferably > 3.0 (J1/2.cm-3/2), $\delta$ being the solubility parameter calculated according to Fedor method, and
- the melt viscosity ratio of polymer (B) over matrix polymer (A) is less than 0.30, preferably less than 0.20, the melt

viscosity being measured by capillary rheometry at 210°C and a shear rate of 100 $s^{-1}$.

DESCRIPTION OF EMBODIMENTS

The invention will now be described in more detail without limitation in the following description.

According to the invention, a PPA is used for improving the processability of an extruded thermoplastic composition comprising a matrix polymer. Preferably, a PPA is used as a polymer processing aid in extruding a polyolefin composition.

The term "polymer processing aid" or PPA, also referred to as "extrusion agent", refers to an additive used to improve the conversion of polymer materials, to improve the extrusion processability of polymer materials, and/or to reduce quality defects such as melt fracture and die buildup which may arise during extrusion process, and may also improve mechanical and/or optical properties of polymer materials.

Examples of the improvement provided by the use of the PPA according to the invention include, but not limited to, elimination or reduction of melt fracture (shark skin); improvement of film transparency; improvement of smoothness and surface aspect; improvement of product appearance; improvement of mechanical properties; reduction of gels; gauge control; maintenance time reduction; reduction of die buildup; consistency of production; smoother extrusion conditions; lower energy consumption; reduction of cycle times and quicker transition; reduction of potential negative interaction with other film additives such as antiblock and hindered amine light stabilizers (HALS); reduction of extruder torque; reduction of polymer critical shear rate.

A common means of evaluating PPA performance is to measure the time to eliminate melt fracture once the PPA is introduced. A typical test involves setting up extrusion conditions favorable to melt fracture formation that include proper selection of tooling, polymers and process conditions. Once the correct conditions for melt fracture formation are obtained, and the process is stable, PPA can then be added, and the time to eliminate melt fracture recorded. A better performing PPA is one that requires less time to eliminate melt fracture. The elapsed time after extruder start-up in which extruded articles exhibit a high degree of melt fracture before obtaining an extrudate having a smooth surface, free of melt fracture is also called as a conditioning time.

In general, PPAs found capable of eliminating melt fracture quickly are also found to provide better efficiency. As an example, when producing a blown film, if one PPA can eliminate melt fracture in 30 minutes and another PPA in 40 minutes, the PPA able to eliminate melt fracture in 30 minutes is said to be more efficient at eliminating melt fracture.

The present invention provides a thermoplastic polymer composition comprising a matrix polymer (A) and a polymer processing aid PPA (B), wherein

- ($\delta$ polymer (B) - $\delta$ matrix polymer (A)) >=2.0 (J1/2.cm-3/2), preferably > 3.0 (J1/2.cm-3/2), $\delta$ being the solubility parameter calculated according to Fedor method, and
- the melt viscosity ratio of polymer (B) over matrix polymer (A) is less than 0.30, preferably less than 0.20, the melt viscosity being measured by capillary rheometry at 210°C and a shear rate of 100 $s^{-1}$.

In some embodiments, the difference between the solubility parameter of polymer (B) and the solubility parameter of matrix polymer (A) ($\delta$ polymer (B) - $\delta$ matrix polymer (A)) is greater than 3.2, preferably greater than 3.5, more preferably greater than 4.0, even more preferably greater than 5.0 (J1/2.cm-3/2).

In some embodiments, melt viscosity ratio of polymer (B) over matrix polymer (A) is less than 0.15, preferably less than 0.10, more preferably less than 0.05.

In some embodiments, the thermoplastic polymer composition comprises a matrix polymer (A) and a polymer processing aid PPA (B), wherein

- ($\delta$ polymer (B) - $\delta$ matrix polymer (A)) > 3.2 (J1/2.cm-3/2), preferably > 3.5 (J1/2.cm-3/2), $\delta$ being the solubility parameter calculated according to Fedor method, and
- the melt viscosity ratio of polymer (B) over matrix polymer (A) is less than 0.30, preferably less than 0.20, the melt viscosity being measured by capillary rheometry at 210°C and a shear rate of 100 $s^{-1}$.

In some embodiment, the thermoplastic polymer composition has a ratio of ($\delta$ polymer (B) - $\delta$ matrix polymer (A)) over (melt viscosity ratio of polymer (B) over matrix polymer (A)) which is greater than 13.1, preferably greater than 20.0, more preferably greater than 30.0.

According to the present invention, the polymer processing aid is typically chosen from a polyamide, a copolyether block amides (PEBA), or a mixture thereof.

Polyamide

According to the present invention, the polymer is typically a homopolyamide, i.e. a polyamide obtained from a single type of monomer, or a copolyamide, i.e. a polyamide obtained from several types of different monomers.

The monomer (repeat unit) constituting the polyamide can be chosen from units derived from an amino acid, a lactam and a unit corresponding to the formula (Ca diamine).(Cb diacid), with a representing the number of carbon atoms of the diamine and b representing the number of carbon atoms of the diacid, a and b each ranging from 4 to 36.

When the unit represents a unit derived from an amino acid, it can be chosen from 9-aminononanoic acid (A=9), 10-aminodecanoic acid (A=10), 12-aminododecanoic acid (A=12) and 11-aminoundecanoic acid (A=11) and also its derivatives, in particular N-heptyl-11-aminoundecanoic acid.

When the unit represents a unit derived from a lactam, it can be chosen from pyrrolidinone, 2-piperidinone, caprolactam (A=6), enantholactam, caprylolactam, pelargolactam, decanolactam, undecanolactam and lauryllactam (A=12).

When the unit represents a unit derived from a unit corresponding to the formula (Ca diamine).(Cb diacid), the (Ca diamine) unit is chosen from linear or branched aliphatic diamines, cycloaliphatic diamines and alkylaromatic diamines.

When the diamine is aliphatic and linear, of formula H2N-(CH2)a-NH2, the (Ca diamine) monomer is preferentially chosen from butanediamine (a=4), pentanediamine (a=5), hexanediamine (a=6), heptanediamine (a=7), octanediamine (a=8), nonanediamine (a=9), decanediamine (a=10), undecanediamine (a=11), dodecanediamine (a=12), tridecanediamine (a=13), tetradecanediamine (a=14), hexadecanediamine (a=16), octadecanediamine (a=18), octadecenediamine (a=18), eicosanediamine (a=20), docosanediamine (a=22) and diamines obtained from fatty acids.

When the diamine is aliphatic and branched, it can comprise one or more methyl or ethyl substituents on the main chain. For example, the (Ca diamine) monomer can advantageously be chosen from 2,2,4-trimethyl-1,6-hexanediamine, 2,4,4-trimethyl-1,6-hexanediamine, 1,3-diaminopentane, 2-methyl-1,5-pentanediamine and 2-methyl-1,8-octanediamine.

When the (Ca diamine) monomer is cycloaliphatic, it is preferentially chosen from bis(3,5-dialkyl-4-aminocyclohexyl)methane, bis(3,5-dialkyl-4-aminocyclohexyl)ethane, bis(3,5-dialkyl-4-aminocyclo-hexyl)propane, bis(3,5-dialkyl-4-aminocyclohexyl)butane, bis(3-methyl-4-aminocyclohexyl)methane (BMACM or MACM), p-bis(aminocyclohexyl)methane (PACM) and isopropylidenedi(cyclohexylamine) (PACP). It can also comprise the following carbon-based backbones: norbornylmethane, cyclohexylmethane, dicyclohexylpropane, di(methylcyclohexyl) and di(methylcyclohexyl)propane. A non-exhaustive list of these cycloaliphatic diamines is given in the publication "Cycloaliphatic Amines" (Encyclopedia of Chemical Technology, Kirk-Othmer, 4th Edition (1992), pp. 386-405). When the (Ca diamine) monomer is alkylaromatic, it is preferentially chosen from 1,3-xylylenediamine and 1,4-xylylenediamine.

When the unit is a unit corresponding to the formula (Ca diamine).(Cb diacid), the (Cb diacid) unit is chosen from linear or branched aliphatic diacids, cycloaliphatic diacids and aromatic diacids.

When the (Cb diacid) monomer is aliphatic and linear, it is chosen from succinic acid (b=4), pentanedioic acid (b=5), adipic acid (b=6), heptanedioic acid (b=7), octanedioic acid (b=8), azelaic acid (b=9), sebacic acid (b=10), undecanedioic acid (b=11), dodecanedioic acid (b=12), brassylic acid (b=13), tetradecanedioic acid (b=14), hexadecanedioic acid (b=16), octadecanedioic acid (b=18), octadecenedioic acid (b=18), eicosanedioic acid (b=20), docosanedioic acid (b=22) and fatty acid dimers containing 36 carbons.

The fatty acid dimers mentioned above are dimerized fatty acids obtained by oligomerization or polymerization of hydrocarbon-based, long-chain unsaturated monobasic fatty acids (such as linoleic acid and oleic acid), as described in particular in document EP 0 471 566.

When the diacid is cycloaliphatic, it can comprise the following carbon-based backbones: norbornylmethane, cyclohexylmethane, dicyclohexylmethane, dicyclohexylpropane, di(methylcyclohexyl) and di(methylcyclohexyl)propane.

When the diacid is aromatic, it is preferentially chosen from terephthalic acid (denoted T), isophthalic acid (denoted I) and naphthalenic diacids.

The polyamides may be crystalline or amorphous and transparent.

Preferably, the polyamides according to the invention are chosen from aliphatic polyamides, more particularly those of which the chain length of the units ranges from 4 to 18, more particularly from 4 to 12. More preferentially, the polyamides according to the invention are chosen from a polyamide being PA6, PA10, PA11, PA12, PA66, PA 610, PA612, PA1010, PA1012, PA 1212, or a copolyamide PA 6/12, PA 6/11, PA 6/1010, PA 6/66, PA 6/66/12, PA 6/66/11, PA 6/66/610, PA 6/612/11, or a blend of these polymers.

The molecular weight of the polyamide can vary greatly, as those skilled in the art will understand. In some embodiments, the weight-average molecular weight $M_w$ of the polyamide is between 300 and 50000 g/mol, preferably between 500 and 30000 g/mol, more preferably between 1000 and 25000 g/mol.

The weight-average molecular weight, or mass-average molar mass $M_w$ is expressed as PMMA equivalents (used as a calibration standard) and can be measured by size exclusion chromatography (SEC) according to the standard

ISO 16014-1: 2019, the polymer being dissolved in hexafluoroisoproponol stabilized with 0.05 M potassium trifluoroacetate for 24 h at room temperature at a concentration of 1 g/L before being passed through the columns, for example at a flow rate of 1 ml/min, the molar mass being measured by the refractive index. Size exclusion chromatography can be performed using columns of modified silica, for example on a set of two columns and a pre-column of modified silica (such as the PGF columns and pre-columns from Polymer Standards Service) comprising a 1000 Å column, with dimensions of 300×8 mm and a particle size of 7 μm, a 100 Å column, with dimensions of 300×8 mm and a particle size of 7 μm and a pre-column with dimensions of 50×8 mm, for example at a temperature of 40° C.

The polyamide or copolyamide can be obtained by melt condensation of a single type of monomers or two different types of monomers as described above.

Some suitable polyamides or copolyamides are commercially available from ARKEMA under the trademark RILSAN®, Platamid®, or from EVONIK under the trademark VESTAMID® VESTAMELT®, or from EMS under the trademark GRILAMIDO, GRILTEX®.

A polyamide, such as PA 12, or a copolyamide suitable according to the present invention can also be obtained by anionic polymerization of lactam(s) in solvent or in solution. Some suitable ones are commercially available under the trademark ORGASOL® from Arkema.

PEBA

According to the present invention, the polymer may be a copolyether block amides (PEBA), result from the polycondensation of polyamide blocks bearing reactive ends with polyether blocks bearing reactive ends, such as, *inter alia:*

1) polyamide blocks bearing diamine chain ends with polyoxyalkylene blocks bearing dicarboxylic chain ends;
2) polyamide blocks bearing dicarboxylic chain ends with polyoxyalkylene blocks bearing diamine chain ends, obtained by cyanoethylation and hydrogenation of α,ω-dihydroxylated aliphatic polyoxyalkylene blocks, known as polyetherdiols;
3) polyamide blocks bearing dicarboxylic chain ends with polyetherdiols, the products obtained being, in this particular case, polyetheresteramides.

The polyamide blocks bearing dicarboxylic chain ends originate, for example, from the condensation of polyamide precursors in the presence of a chain-limiting dicarboxylic acid. The polyamide blocks bearing diamine chain ends originate, for example, from the condensation of polyamide precursors in the presence of a chain-limiting diamine.

The number-average molecular mass Mn of the polyamide blocks is between 400 and 20 000 g/mol and preferably between 500 and 10 000 g/mol.

The polymers containing polyamide blocks and polyether blocks may also comprise randomly distributed units.

The types of polyamide blocks may be used as those descried above for polyamide. Typically, the polyamides constituting the polyamide blocks are chosen from aliphatic polyamides, more particularly those of which the chain length of the units ranges from 4 to 18, more particularly from 4 to 12. More preferentially, the polyamides constituting the polyamide blocks are chosen from PA6, PA10, PA11, PA12, PA66, PA 610, PA612, PA1010, PA1012, PA 1212, or a copolyamide PA 6/12, PA 6/11, PA 6/1010, PA 6/66, PA 6/66/12, PA 6/66/11, PA 6/66/610, PA 6/612/11, or a blend of these polymers.

The polyether PE blocks are formed from alkylene oxide units. These units may be, for example, ethylene oxide units, propylene oxide units or tetrahydrofuran (which leads to polytetramethylene glycol sequences). Use is thus made of PEG (polyethylene glycol) blocks, i.e. blocks formed from ethylene oxide units, PPG (propylene glycol) blocks, i.e. blocks formed from propylene oxide units, PO3G (polytrimethylene glycol) blocks, i.e. blocks formed from polytrimethylene glycol ether units (such copolymers with polytrimethylene ether blocks are described in US6590065), and PTMG blocks, i.e. blocks formed from tetramethylene glycol units, also known as polytetrahydrofuran. The PEBA copolymers may comprise in their chain several types of polyethers, the copolyethers possibly being in block or statistical form.

Use may also be made of blocks obtained by oxyethylation of bisphenols, for instance bisphenol A. The latter products are described in patent EP613919.

The polyether blocks may also be formed from ethoxylated primary amines. As examples of ethoxylated primary amines, mention may be made of the products of formula:

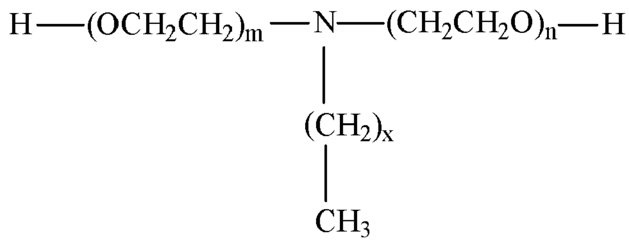

in which m and n are between 1 and 20 and x is between 8 and 18. These products are commercially available under the brand name Noramox® from the company CECA and under the brand name Genamin® from the company Clariant.

The flexible polyether blocks may comprise polyoxyalkylene blocks bearing $NH_2$ chain ends, such blocks being able to be obtained by cyanoacetylation of $\alpha,\omega$-dihydroxylated aliphatic polyoxyalkylene blocks referred to as polyetherdiols. More particularly, use may be made of the Jeffamine products (for example Jeffamine® D400, D2000, ED 2003, XTJ 542, which are commercial products from the company Huntsman, also described in patents JP2004346274, JP2004352794 and EP1482011).

The polyetherdiol blocks are either used in unmodified form and copolycondensed with polyamide blocks bearing carboxylic end groups, or they are aminated to be converted into polyetherdiamines and condensed with polyamide blocks bearing carboxylic end groups. The general method for the two-step preparation of PEBA copolymers containing ester bonds between the PA blocks and the PE blocks is known and is described, for example, in French patent FR2846332. The general method for preparation of the PEBA copolymers of the invention containing amide bonds between the PA blocks and the PE blocks is known and is described, for example, in European patent EP1482011. The polyether blocks may also be mixed with polyamide precursors and a chain-limiting diacid to make polymers containing polyamide blocks and polyether blocks having randomly distributed units (one-step process).

Needless to say, the name PEBA in the present description of the invention relates not only to the Pebax® products sold by Arkema, to the Vestamid® products sold by Evonik® and to the Grilamid® products sold by EMS, but also to the Kellaflex® products sold by DSM or to any other PEBA from other suppliers.

Adjuvant

In some embodiments, the polymer processing aid is used in combination with at least one adjuvant. In other words, the polymer processing aid and the at least one adjuvant are used together as a PPA in extruding the polymer composition. The adjuvant may be selected so as to further improve the stability and/or effectiveness of such PPA. Examples of the adjuvant include, but not limited to:

i) Aliphatic polyesters, such as poly(caprolactone), poly(lactic acid) and poly(butylene adipate);
ii) Poly(hydroxybutyrate);
iii) Silicones;
iv) Fatty acid esters, such as sorbitan monolaurate;
v) Fatty acid amides, such as stearamide and erucamide.

The polymer processing aid and adjuvant may be provided as a blend before being included in a masterbatch or before being directly added to the polymer composition, as described below. The blend may be formed by a process comprising dry-blending, melt-blending or compounding. It may be in the form of pellets or a powder for example.

Matrix polymer (A)

In some embodiments of the invention, the matrix polymer (A) is a polyolefin composition, preferably, the polyolefin composition comprises, essentially consists of, or consists of non-functionalized polyolefin.

Examples of the polyolefin composition include, but not limited to, a linear low-density polyethylene (LLDPE), a low-density polyethylene (LDPE), a medium-density polyethylene (MDPE), a high-density polyethylene (HDPE), an ultra-high-density polyethylene (UHDPE), a polypropylene (PP), or combinations thereof. Preferably, the polyolefin composition comprises, essentially consists of, or consists of a LDPE or a LLDPE.

The melt index of the matrix polymer may be from 0.01 g/10min to 100 g/10min, preferably from 0.06 g/10 min to 60 g/10 min, and more preferably from 0.06 to 10 g/10min (melt index measured with a 2.16 kg weight, with a collection shear rate of $300s^{-1}$ and at a melt temperature of 190°C).

In one embodiment, these ranges apply to the matrix composition without / before PPA addition. In another embodiment, these ranges apply to the resulting thermoplastic composition after PPA addition.

The polydispersity of the matrix polymer composition may be from 1.1 to 9.0, preferably from 1.1 to 4.0, and more preferably from 1.1 to 2.5. These ranges apply to the matrix composition without / before PPA addition.

Polydispersity Index (PDI) is a measure of chain length homogeneity, calculated by a ratio of the weight average molecular weight (Mw) and number average molecular weight (Mn). These values are defined via the following formulas.

$$M_n = \frac{\sum N_i M_i}{\sum N_i}$$

$$M_w = \frac{\sum N_i M_i^2}{\sum N_i M_i}$$

$$PDI = \frac{M_w}{M_n}$$

Where $N_i$ is number of molecules, and $M_i$ is the molar mass of the molecules.

The polydispersity of the matrix polymer can be typically determined by gel permeation chromatography (GPC)-viscometry. The GPC-viscometry technique was based on the method of ASTM D6474-99 and uses a dual refractometer/viscometer detector system to analyze polymer samples.

In some embodiments, the polyolefin in the polyolefin composition is or comprises non-functionalized polyolefin.

The polyolefin composition may also include one or more other additives, such as fillers, pigments, dyes, antioxidants, UV absorbers and Light stabilizers, nucleating agents, reinforcing agents.

The filler can comprise dispersed organic or inorganic particles. An inorganic filler can be, for example, a silica, an alumina, a Zeolite, a titanium oxide, a carbonate (for example, sodium carbonate or potassium carbonate), hydrotalcite, talc, a zinc oxide, a magnesium oxide or a calcium oxide, a diatomaceous earth, carbon black, and the like. The pigments may be inorganic or organic.

In some embodiments, the polyolefin composition is extruded as a film, a tube, or a sheet, for example as a blown film.

The PPA and the at least one adjuvant if present are added to the thermoplastic polymer composition to be extruded so that the total amount of the PPA and the at least one adjuvant (if present) is between 10 and 200,000 ppm by weight, preferably between 25 and 100,000 ppm by weight, more preferably between 50 and 2000 ppm by weight based on the total weight of the resulting thermoplastic composition after extrusion.

In a case where the PPA is used together with the at least one adjuvant, the weight ratio of the PPA and the at least one adjuvant in the resulting polymer composition may be in the range from 90:10 to 20:80, preferably from 70:30 to 30:70, more preferably from 60:40 to 40:60, and for example approximately 50:50.

## Masterbatch

In some embodiments, the PPA (B) and the adjuvant if present are added together in the form of a masterbatch to the thermoplastic polymer composition comprising the matrix polymer (A).

In the present application, the term "masterbatch" refers to a composition comprised of a polymer processing aid pre-dispersed in a carrier polymer. The term "carrier polymer" or "diluent polymer" describes a primary component of a masterbatch used to contain a polymer processing aids composition. The carrier polymer may be or comprise the same polymer composition to be extruded. Alternatively, the carrier polymer may be or comprise a different polymer composition which does not adversely affect the extrusion behaviour of the polymer composition to be extruded. In the present application, the polymer composition to be extruded, namely the host resin or matrix polymer, is the polyolefin composition.

The masterbatch may be provided in the form of a powder, granule or pellet. The preparation of the masterbatch can use any method or process known in the art, such as the method described in US8501862.

The masterbatch is normally produced by extrusion compounding to produce a product in pellet form, but embodiments other than pellets may also be included.

The carrier polymer may be a polyolefin, which may be functionalized, non-functionalized, or a mixture thereof. For example, be a polyethylene, such as a low-density polyethylene (LDPE), a high-density polyethylene (HDPE), a linear low-density polyethylene (LLDPE), a medium-density polyethylene (MDPE), or ultra-high-density polyethylene (UHDPE) or combinations thereof. It can be a polyethylene obtained using a catalyst of the metallocene type or more

generally a 'single-site' catalyst, a catalyst of Phillips type or a catalyst of Ziegler-Natta type; a polypropylene, in particular an iso- or syndiotactic polypropylene; a biaxially-oriented polypropylene; a polybutene (obtained from 1-butene); a poly(3-methylbutene) or a poly(4-methylpentene); Blends of two or more polyolefins, for example a blend of an LLDPE with an LDPE can be used as the carrier.

The carrier polymer may be a copolymer, for example, ethylene acrylate (can be found under the trademark Lotryl® from SK Functional polymer) or ethylene vinyl acetate.

The selection of a suitable polyolefin carrier polymer for the masterbatch normally addresses several concerns including miscibility in the polyolefin polymer to be used in, and ability to disperse well without gel formation. One would expect that the masterbatch prepared with a low Melt Index (high melt viscosity) carrier polymer would generate gels or have the potential of generating gels if introduced into a polyolefin polymer of a higher Melt Index. The gel formed specifically would be comprised of a large undispersed agglomerate of the masterbatch. Normally, the carrier polymer is selected to have an equal to or higher Melt Index than the matrix polymer to be used in. A typical Melt Index range for a carrier polymer is between 0.06 and 20, and a masterbatch produced with this polyethylene carrier polymer would be most suitable in polyolefin polymer having a Melt Index at or below 2.

In some embodiments, the PPA and the adjuvant if present are added to the thermoplastic polymer composition comprising the matrix polymer in the form of a masterbatch containing polyolefin.

In some embodiments, the masterbatch comprises the PPA and the adjuvant if present at levels in the range between 1 and 30% by weight, preferably between 2 and 15% by weight, more preferably between 5 and 10% by weight based on the total weight of the masterbatch. For example, the amount of the PPA and the adjuvant if present in the masterbatch is approximately 7.5% by weight.

The masterbatch can be used in any manner known in the art, and is typically either preblended with thermoplastic polymer composition comprising the matrix polymer in pellet or powder form, or fed individually using suitable equipment such as loss and weight feeders, or pre-compounded to produce an extrudable compound. For example, the masterbatch may be added in a dry blend during extrusion processing of a polymer composition.

The masterbatch is particularly advantageous when used as a PPA for thermoplastic polymers, such as polyethylenes of high molecular weight and/or exhibiting a narrow molecular weight distribution (typically such that the polydispersity index is less than 3, rather less than 2.5 and better still less than 2.2). The masterbatch is particularly useful for the extrusion of a polyolefin, in particular a polyethylene, in the form of a film.

Besides in the form of a masterbatch, in some embodiments, the PPA and the adjuvant if present are directly added to the polymer composition. The PPA and the adjuvant if present may be added separately, simultaneously, or as a blend (in particular a dry blend), to the thermoplastic polymer composition to be extruded.

The PPA and the adjuvant if present may be added to the thermoplastic polymer composition by dry-blending in a powdered form, or by melt-blending or compounding. The melt-blending may be carried out in an extruder or co-kneader, more preferably a twin-screw extruder or a co-kneader.

## Process

The invention also relates to a process of extruding a thermoplastic polymer composition comprising a matrix polymer in an extruder, comprising a step of feeding a polymer processing aid to the extruder.

The extrusion process of the present invention is typically a melt extrusion process.

In some embodiments, the process further comprises a step of feeding at least one adjuvant to the extruder. The PPA, the at least one adjuvant, and the thermoplastic polymer composition are those defined above.

In some embodiments, the polymer processing aid and the adjuvant if present are fed in the form of a masterbatch composition containing a carrier polymer (C).

In some embodiments, the polymer processing aid and the adjuvant if present are directly fed to the extruder, separately, simultaneously, or as a blend.

The process may comprise a further step to feed one or more other additives to the extruder, such as fillers, pigments, dyes, antioxidants.

In some embodiments, the process is conducted at a shear rate which would produce a thermoplastic composition extrudate having melt fracture defects if carried out using a thermoplastic composition consisting essentially of a matrix polymer.

## Article

The invention also relates to an article comprising or made from the thermoplastic polymer composition extruded by the process according to the invention.

In some embodiments, the article is selected from a film, a tubing, a pipe, a wire, a fiber, a cable, a wire coating and a cable jacketing.

EXAMPLES

The following examples illustrate the invention without limiting it.

Synthesis of polyamides

Example 1:

In a 4L autoclave, 308g of caprolactam, 111.6g of hexamethylenediamine, 140.6g of adipic acid, 840g of lauryl lactam and 7g of water are introduced. After inerting under nitrogen, the mixture is heated up to 280°C material with stirring and autogenous pressure. The mixture is maintained at 280°C for 4 hours, then is expanded over 2 hours to atmospheric pressure to reach 230°C material. A nitrogen sweep is set up, a torque-meter makes it possible to follow the viscosification of the reaction medium, the polymerization stops at the desired torque. The reactor is drained into a water bath, the polymer then forms a cooled rod which is granulated.

Example 2:

In a 4L autoclave, 630g of caprolactam, 217g of hexamethylenediamine, 273g of adipic acid, 280g of lauryllactam and 7g of water are introduced. The synthesis proceeds as in Example 1, except that the material temperature to be reached is 260°C and a holding time of 3 hours.

Example 3:

In a 4L autoclave, 343g of caprolactam, 98.1g of hexamethylenediamine, 289.6g of dodecanedioic acid, 421.4g of amino-11-undecanoic acid and 7g of water are introduced. After inerting under nitrogen, the mixture is heated up to 260°C material with stirring and autogenous pressure. The mixture is maintained at 260° C for 1 hour, then is expanded over 2 hours to atmospheric pressure to reach 230°C material. A nitrogen sweep is set up for 30 min then placed under vacuum (<20 mbar). 247.9g of PEG of molar mass of 600, then 2.8g of zirconium acetate are introduced into the reactor. The reactor is put back under vacuum and the polymerization stops at the desired torque. The reactor is drained into a water bath, the polymer then forms a cooled rod which is granulated.

Example 4:

In a 4L autoclave, 655.1g of caprolactam, 73.4g of adipic acid and 7g of water are introduced. After inerting under nitrogen, the mixture is heated to 230°C material with stirring and autogenous pressure. The mixture is maintained at 260° C for 1 hour, then is expanded over 2 hours to atmospheric pressure to reach 230° C material. A nitrogen sweep is set up for 10 min then 671.5g of PEG1500 are introduced into the reactor. The reactor is placed under vacuum (<10 mbar) for 1 hour then 4.2 g of zirconium butoxide are added. The polymerization continues under vacuum until the desired torque. The reactor is drained into a water bath, the polymer then forms a cooled rod which is granulated.

Example 5:

In a 4L autoclave, 659.9g of lauryllactam, 70.6g of adipic acid and 7g of water are introduced. After inerting under nitrogen, the mixture is heated up to 280°C material with stirring and autogenous pressure. The mixture is maintained at 280°C for 4 hours, then is expanded over 2 hours to atmospheric pressure to reach 230°C material. A nitrogen sweep is set up for 10 min then 669.5g of PEG1500 are introduced into the reactor. The reactor is placed under vacuum (<10 mbar) for 1 hour then 3 g of zirconium butoxide are added. The polymerization continues under vacuum until the desired torque. The reactor is drained into a water bath, the polymer then forms a cooled rod which is granulated.

Example 6 (Comparative example):

The synthesis proceeds as in Example 5, except that 235.2 g of lauryllactam, 37.3 g of adipic acid, 7 g of water, 576.7 g of PEG1500 and 1.7 g of zirconium butoxide are used.

Example 7:

In a 4L autoclave, 259.8g of lauryllactam, 78.8g of adipic acid and 7g of water are introduced. After inerting under nitrogen, the mixture is heated up to 280° C material with stirring and autogenous pressure. The mixture is

maintained at 280°C for 4 hours, then is expanded over 2 hours to atmospheric pressure to reach 230° C material. A nitrogen sweep is set up for 10 min then 1061.3g of PTMG2000 are introduced into the reactor. The reactor is placed under vacuum (<10 mbar) for 1 hour then 4.2 g of zirconium butoxide are added. The polymerization continues under vacuum until the desired torque. The reactor is drained into a water bath, the polymer then forms a cooled rod which is granulated.

Example 8:

In a 4L autoclave, 648.1g of amino-11-undecanoic acid, 72.0g of adipic acid and 7g of water are introduced. After inerting under nitrogen, the mixture is heated to 250°C material with stirring and autogenous pressure. The mixture is maintained at 250°C for 1 hour, then is expanded over 2 hours to atmospheric pressure to reach 230°C material. A nitrogen sweep is set up for 10 min then 679.8g of PTMG1000 are introduced into the reactor. The reactor is placed under vacuum (<10 mbar) for 1 hour then 2 g of zirconium butoxide are added. The polymerization continues under vacuum until the desired torque. The reactor is drained into a water bath, the polymer then forms a cooled rod which is granulated.

Example 9:

The synthesis proceeds as in Example 5, except that 652 g of lauryllactam, 56.5 g of adipic acid, 7 g of water, 691.5 g of PTMG2000 and 2.2 g of zirconium butoxide are used.

Example 10:

In a 4L autoclave, 7.4g of adipic acid, 1392.6g of lauryllactam and 7g of water are introduced. After inerting under nitrogen, the mixture is heated up to 280°C material with stirring and autogenous pressure. The mixture is maintained at 280°C for 4 hours, then is expanded over 2 hours to atmospheric pressure to reach 230°C material. A nitrogen sweep is set up, a torque-meter makes it possible to follow the viscosification of the reaction medium, the polymerization stops at the desired torque. The reactor is drained into a water bath, the polymer then forms a cooled rod which is granulated.

Example 11:

In a 4L autoclave, 9.3g of adipic acid, 1390.7g of amino-11-undecanoic acid and 7g of water are introduced. After inerting under nitrogen, the mixture is heated to 250° C. material with stirring and autogenous pressure. The mixture is maintained at 250°C for 1 hour, then is expanded over 2 hours to atmospheric pressure to reach 230°C material. A nitrogen sweep is set up, a torque-meter makes it possible to follow the viscosification of the reaction medium, the polymerization stops at the desired torque. The reactor is drained into a water bath, the polymer then forms a cooled rod which is granulated.

Solubility parameter

As an example, the following explains the calculation of the parameter of solubility parameter of Example 1 (Table 1). It is a random copolymer of PA6, PA66 and PA12.

PA6 consists of 5 CH2 groups and 1 amide, PA 66 consists of 10 CH2 groups and 2 amides, PA 12 consists of 11 CH2 groups and 1 amide.

The cohesive energy E is the sum of the squares of the energies of each group.

The molar volume V is the sum of the squares of the molar volumes of each group.

The solubility parameter is the square root of the sum of the mole fractions of E over the sum of the mole fractions of V.

Table 1]

| Ex 1 | Groupes | CH2 | CONH | E J/mol | V cm3/mol | δ (J1/2.cm-3/2) |
|---|---|---|---|---|---|---|
| | E (J/mol) | 4940 | 33490 | | | |
| | V (cm3/mol) | 16.1 | 9. 5 | | | |
| | % mol | | | | | |
| **6** | **34.28%** | 5 | 1 | 58190 | 90 | 23.1 |
| **66** | **12.10%** | 10 | 2 | 116380 | 180 | |
| **12** | **53.62%** | 11 | 1 | 87830 | 186.6 | |

Melt fracture test

Taking the degree of melt fracture of LLDPE only without any additive as 100%, the time to reduce the melt fracture by 100% was obtained for the examples 1 to 14.

The results are given in Table 2 below.

The term "melt fracture" is well known to those skilled in the art and generally refers to a film having obvious signs of surface imperfections which manifest as die lines, haze bands or small bands of soft melt fracture (orange peel) or hard melt fracture (shark-skin). The phrase "melt fracture clear" means a film has a clear, defect free surface.

The polymers of examples 1 to 14 (2000 ppm) were added to a LLDPE (PE) base matrix polymer during extrusion. The LLDPE has 8 g/10 min MVR (melt volume-flow rate) for 2.16 kg weight, under the condition of collection shear rate of $300s^{-1}$ at a melt temperature of 190°C.

[Table 2]

| Ex | PPA | Molar ratios | δ (J1/2.c m-3/2) | Melt visco $100s^{-1}$ 210°C | Δδ (PPA-PE) | Melt viscosit y Ratio PPA/P E | Time to MF clear (min) |
|---|---|---|---|---|---|---|---|
| 1 | PA6/66/12 | 34/12/54 | 23.1 | 50 | 5.6 | 0.023 | 29 |
| 2 | PA6/66/12 | 62/21/16 | 24.6 | 315 | 7.1 | 0.144 | 41 |
| 3 | PA6/612/11-PEG12 | | 22.6 | 60 | 5.1 | 0.028 | 27 |
| 4 | PA6-PEG | 50/50 | 22.5 | 250 | 5 | 0.115 | 31 |
| 5 | PA12 (1500)-PEG (1500) | 50/50 | 20.7 | 250 | 3.2 | 0.115 | 48 |
| 6 (CE) | PA12 (4500)-PEG | 50/50 | 20.1 | 750 | 2.6 | 0.344 | No clear |
| 7 (CE) | PA12 (600)-PTMG (2000) | 50/50 | 19.3 | 300 | 1.8 | 0.138 | No clear |
| 8 | PA 11 (1000)-PTMG (1000) | 50/50 | 20.4 | 470 | 2.9 | 0.216 | 59 |
| 9 | PA 12 (2000)-PTMG (2000) | 50/50 | 20.2 | 430 | 2.9 | 0.197 | 56 |
| 10 | PA12 | | 21.7 | 350 | 4.2 | 0.161 | 48 |
| 11 | PA11 | | 22.1 | 350 | 4.6 | 0.161 | 44 |
| 12 | PA12 Orgasol® 2002 EXD NAT 1 | | 21.7 | 463 | 4.2 | 0.212 | 59 |
| 13 | PA12 Orgasol® 2001 UD NAT 2 | | 21.7 | 117 | 4.2 | 0.054 | 35 |

(continued)

| Ex | PPA | Molar ratios | δ (J1/2.cm-3/2) | Melt visco $100s^{-1}$ 210°C | Δδ (PPA-PE) | Melt viscosit y Ratio PPA/P E | Time to MF clear (min) |
|---|---|---|---|---|---|---|---|
| 14 (CE) | Polystyrene | | 21.6 | 680 | 4.1 | 0.312 | No clear |
| | PE | | 17.5 | 2180 | 0 | 1.000 | / |

As seen in the results for the examples in Table 2, the melt fracture of LLDPE during extrusion was effectively reduced by the use of polymers of examples 1 to 5, 8 to 13 as an additive.

Improvement in melt fracture reduction was particularly remarkable in examples 1 to 5, 10 and 11.

## Claims

1. Thermoplastic polymer composition comprising a matrix polymer (A) and a polymer processing aid (B), wherein

   - (δ polymer (B) - δ matrix polymer (A)) >=2.0 (J1/2.cm-3/2), preferably > 3.0 (J1/2.cm-3/2), δ being the solubility parameter calculated according to Fedor method, and
   - the melt viscosity ratio of polymer (B) over matrix polymer (A) is less than 0.30, preferably less than 0.20, the melt viscosity being measured by capillary rheometry at 210°C and a shear rate of 100 $s^{-1}$.

2. Thermoplastic polymer composition according to claim 1, the amount of polymer processing aid (B) is from 50 to 5000 ppm, preferably from 100 to 3000 ppm, more preferably from 200 to 3000 ppm, based on the weight of the matrix polymer (A).

3. Thermoplastic polymer composition according to claim 1 or 2, wherein the matrix polymer is a polyolefin composition, preferably, the polyolefin composition comprises, essentially consists of, or consists of non-functionalized polyolefin.

4. Thermoplastic polymer composition according to any one of claims 1 to 3, wherein the matrix polymer comprises, essentially consists of, or consists of, a linear low-density polyethylene (LLDPE), a low-density polyethylene (LDPE), a medium-density polyethylene (MDPE), a high-density polyethylene (HDPE), an ultra-high-density polyethylene (UHDPE), or a polypropylene (PP), or combinations thereof.

5. Thermoplastic polymer composition according to any one of claims 1 to 4, wherein the polymer processing aid is chosen from a polyamide, a PEBA, or a mixture thereof.

6. Thermoplastic polymer composition according to claim 5, wherein the polyamide or the block polyamide of PEBA is PA6, PA10, PA11, PA12, PA66, PA 610, PA612, PA1010, PA1012, PA 1212, or a copolyamide PA 6/12, PA 6/11, PA 6/1010, PA 6/66, PA 6/66/12, PA 6/66/11, PA 6/66/610, PA 6/612/11, or a blend of these polymers.

7. Thermoplastic polymer composition according to any one of claims 1 to 6, wherein the polymer processing aid (B) having a solubility parameter greater than 20.0, preferably greater than 21.0 (J1/2.$cm^{-3}$/2), the solubility parameter being calculated according to Fedor method, and
   a melt viscosity of between 10 and 500 Pa.s, preferably between 20 and 400, more preferably between 20 and 350, measured by capillary rheometry at 210°C and a shear rate of 100 $s^{-1}$.

8. Thermoplastic polymer composition according to any one of claims 1 to 7, comprising at least one adjuvant, preferably, the adjuvant is or comprises one or more selected from a polyether, an aliphatic polyester, a poly(hydroxybutyrate), a silicone, a fatty acid ester and a fatty acid amide, preferably a polyether copolymer.

9. Process for melt extrusion of a thermoplastic polymer composition comprising a matrix polymer (A), comprising a step of feeding a matrix polymer (A), a polymer processing aid (B) to the extruder, together or separately, wherein

   - (δ polymer (B) - δ matrix polymer (A)) >=2.0 (J1/2.cm-3/2), preferably > 3.0 (J1/2.cm-3/2), δ being the solubility

parameter calculated according to Fedor method, and
- the melt viscosity ratio of polymer (B) over matrix polymer (A) is less than 0.30, preferably less than 0.20, the melt viscosity being measured by capillary rheometry at 210°C and a shear rate of 100 $s^{-1}$.

**10.** Process according to claim 9, further comprising a step of feeding at least one adjuvant to the extruder.

**11.** Process according to claim 9 or 10, wherein the polymer processing aid and the adjuvant if present are fed in the form of a masterbatch composition containing a carrier polymer (C).

**12.** Process according to any one of claims 9 to 11, wherein the polymer processing aid and the adjuvant if present are directly fed to the extruder, separately, simultaneously, or as a blend.

**13.** Process according to any one of claims 9 to 12, wherein the matrix polymer is a polyolefin, preferably, the polyolefin composition comprises, essentially consists of, or consists of non-functionalized polyolefin.

**14.** Process according to any one of claims 9 to 13, wherein the matrix polymer comprises, essentially consists of, or consists of, a linear low-density polyethylene (LLDPE), a low-density polyethylene (LDPE), a medium-density polyethylene (MDPE), a high-density polyethylene (HDPE), an ultra-high-density polyethylene (UHDPE), or a polypropylene (PP), or combinations thereof.

**15.** Process according to any one of claims 9 to 14, where the amount of polymer processing aid (B) is from 50 to 5000 ppm, preferably from 100 to 3000 ppm, more preferably from 200 to 3000 ppm, based on the weight of the matrix polymer (A).

**16.** Process according to any one of claims 9 to 15, wherein the polymer processing aid (B) having a solubility parameter greater than 20.0, preferably greater than 21.0 (J1/2.$cm^{-3}$/2), the solubility parameter being calculated according to Fedor method, and a melt viscosity of between 10 and 500 Pa.s, preferably between 20 and 400, more preferably between 20 and 350, measured by capillary rheometry at 210°C and a shear rate of 100 $s^{-1}$

**17.** Process according to any one of claims 9 to 16, wherein the polymer processing aid is chosen from a polyamide, a PEBA, or a mixture thereof.

**18.** Process according to claim 17, wherein the polyamide or the block polyamide of PEBA is PA6, PA10, PA11, PA12, PA66, PA 610, PA612, PA1010, PA1012, PA 1212, or a copolyamide PA 6/12, PA 6/11, PA 6/1010, PA 6/66, PA 6/66/12, PA 6/66/11, PA 6/66/610, PA 6/612/11, or a blend of these polymers.

**19.** An extruded article comprising a polymer composition as defined in any one of claims 1 to 8, preferably the article being a film, a sheet, a tube, a pipe, a wire, a fiber, a cable, a wire coating or a cable jacketing.

**20.** Use of a polymer (B) as a processing aid for the extrusion of a thermoplastic polymer composition comprising a matrix polymer (A), wherein

- ($\delta$ polymer (B) - $\delta$ matrix polymer (A)) >=2.0 (J1/2.cm-3/2), preferably > 3.0 (J1/2.cm-3/2), $\delta$ being the solubility parameter calculated according to Fedor method, and
- the melt viscosity ratio of polymer (B) over matrix polymer (A) is less than 0.30, preferably less than 0.20, the melt viscosity being measured by capillary rheometry at 210°C and a shear rate of 100 $s^{-1}$.

Europäisches Patentamt
European Patent Office
Office européen des brevets

# EUROPEAN SEARCH REPORT

Application Number
EP 23 30 5336

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/113644 A1 (SUBRAMANIAN NARAYANAN SANKARA [US] ET AL) 6 May 2010 (2010-05-06) * the whole document * ----- | 1-20 | INV. C08L23/00 |
| | | | TECHNICAL FIELDS SEARCHED (IPC) |
| | | | C08L |

The present search report has been drawn up for all claims

1

| Place of search | Date of completion of the search | Examiner |
|---|---|---|
| Munich | 27 June 2023 | Rouault, Yannick |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..........
& : member of the same patent family, corresponding document

EPO FORM 1503 03.82 (P04C01)

# ANNEX TO THE EUROPEAN SEARCH REPORT ON EUROPEAN PATENT APPLICATION NO. EP 23 30 5336

This annex lists the patent family members relating to the patent documents cited in the above-mentioned European search report. The members are as contained in the European Patent Office EDP file on
The European Patent Office is in no way liable for these particulars which are merely given for the purpose of information.

27-06-2023

| Patent document cited in search report | Publication date | Patent family member(s) | Publication date |
|---|---|---|---|
| US 2010113644 A1 | 06-05-2010 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5986005 A
- WO 02066544 A
- US 2013093118 A
- WO 2023017327 A
- EP 0471566 A
- US 6590065 B
- EP 613919 A
- JP 2004346274 B
- JP 2004352794 B
- EP 1482011 A
- FR 2846332
- US 8501862 B


### Non-patent literature cited in the description


- **R.F. FEDORS.** *Polymer engineering and science,* 1974, vol. 142, 147-154
- **R.F. FEDORS.** *Polym. Eng. Science,* 1974, vol. 14 (2), 147
- **ERIC A. GRULKE.** Solubility Parameter Values, Polymer Handbook. 1999, vol. VII, 675-714
- Cycloaliphatic Amines. **KIRK-OTHMER.** Encyclopedia of Chemical Technology. 1992, 386-405